# FASCICULE DE BREVET EUROPEEN

(11) **EP 0 784 146 B1**
(45) Date de publication et mention de la délivrance du brevet: **14.08.2002**
(21) Numéro de dépôt: 97810007.1
(22) Date de dépôt: 08.01.1997
(51) Int. Cl.: E06B 9/82, E06B 9/88, E05F 15/00

(54) **Installation de fermeture ou de protection solaire motorisée**
Motorbetriebene Schliess- oder Sonnenschutzeinrichtung
Motorised closure or solar protection installation

(30) Priorité: 12.01.1996 FR 9600313
(43) Date de publication de la demande: 16.07.1997
(73) Titulaire: SOMFY, F-74300 Cluses (FR)
(72) Inventeur: Orsat, Jean-Michel, 74300 Chatillon-Sur-Cluses (FR)
(74) Mandataire: Meylan, Robert Maurice

(56) Documents cités:
- EP-A- 0 410 204
- EP-A- 0 678 643
- GB-A- 2 221 769
- US-A- 4 234 833
- US-A- 5 218 282

## Description

La présente invention a pour objet une installation de fermeture ou de protection solaire telle que définie au préambule de la revendication 1.

Une installation de ce type, pour la commande d'une porte automatique, est connue du document EP-A-0 410 204. Dans cette installation l'arrêt du moteur est commandé lors de la détection d'une baisse de la vitesse en dessous d'un seuil prédéterminé ou d'une inversion du mouvement de la porte. Une telle inversion est toujours interprétée comme la rencontre d'un obstacle. Or, le franchissement d'un point dur provoque également une chute de la vitesse, voire l'inversion du mouvement et la porte s'arrêtera au lieu de poursuivre son mouvement.

De la demande de brevet DE 44 40 449, on connaît une installation dans laquelle la détection d'un surcouple signifie que le volet roulant, complètement enroulé, est arrivé en butée en position haute. Un jeu mécanique est introduit entre la sortie du motoréducteur et le tube d'enroulement du volet roulant, de telle sorte que lorsque le volet roulant se déroule, le moteur retenant celui-ci, la rencontre d'un obstacle par le volet roulant se traduit par une brusque chute de la vitesse de rotation, voire par l'arrêt momentané du tube d'enroulement, le temps que le moteur rattrape le jeu. La détection de cette chute de vitesse provoque l'arrêt du moteur. L'installation utilise un moteur asynchrone présentant un enroulement principal et un enroulement auxiliaire et le surcouple est détecté, d'une part, par l'augmentation du déphasage des tensions principale et auxiliaire et, d'autre part, par l'annulation de la vitesse angulaire du tambour d'enroulement.

Lorsque le volet roulant est complètement enroulé, l'arrêt du moteur se fait donc par l'arrivée en butée haute de la dernière lame du volet roulant, ce qui se traduit par une brusque et forte traction sur le volet roulant. Or, la répétition d'une telle traction peut être néfaste pour le volet roulant, en particulier pour son attache au tube d'enroulement-, ainsi que pour le mécanisme d'accouplement entre le moteur et le tube d'enroulement.

En outre, lors de la descente du volet roulant, la rencontre d'un obstacle ne sera pas distinguée de la butée basse, ce qui provoquera l'arrêt du moteur avec écrasement de cet obstacle par le poids du volet roulant. Si le volet roulant est très lourd ou que l'installation concerne une porte et que l'obstacle est constitué par une partie d'un corps humain, notamment la tête ou le membre d'un enfant, cet écrasement peut être très dangereux.

Enfin, le franchissement d'un point dur, en descente, se traduira également par une chute de la vitesse angulaire du tube d'enroulement et une variation du couple, ce qui provoquera, comme la butée basse, l'arrêt du moteur.

Du brevet US 4,234,833, on connaît par ailleurs un opérateur de porte utilisant un circuit de comptage pour déterminer les positions limites de la porte. L'opérateur comprend un capteur de rotation délivrant des impulsions qui sont appliquées, d'une part, à un circuit destiné à détecter une chute de la vitesse à zéro et, d'autre part, à un compteur. La comparaison de l'état du circuit de détection de chute de vitesse avec l'état du compteur est utilisée pour inverser le sens de rotation du moteur lors de la rencontre d'un obstacle. Ce circuit ne permet pas non plus de distinguer un point dur d'un obstacle.

La présente invention a pour but de réaliser une installation capable de distinguer la rencontre d'un obstacle du passage d'un point dur, ce dernier ne devant pas se traduire par l'arrêt du moteur.

A cet effet, dans l'installation selon l'invention, le compteur bidirectionnel est lié cinématiquement à l'arbre d'entraînement et l'unité logique est programmée de manière à commander la poursuite de la descente lorsque la détection d'une chute de vitesse est accompagnée d'une incrémentation/ décrémentation du compteur bidirectionnel, une telle incrémentation/ décrémentation signifiant la rencontre d'un point dur, comme ceci sera exposé plus loin.

L'identification d'un point dur en descente est basée sur l'observation qu'en raison des jeux existant naturellement dans les engrenages de la transmission de la rotation du moteur à l'arbre d'entraînement et, le cas échéant, d'un jeu additionnel introduit dans cette transmission, il se produit des oscillations angulaires dans la rotation de l'arbre d'entraînement, en particulier du tube d'enroulement. L'utilisation d'un compteur bidirectionnel permet de détecter ces oscillations qui se traduisent par une incrémentation/ décrémentation du compteur bidirectionnel.

L'utilisation d'un compteur bidirectionnel présente en outre l'avantage que le bilan de comptage après les oscillations est l'image fidèle de la position de l'élément de fermeture, en particulier de la lame finale d'un volet roulant.

Dans le cas d'un volet roulant à lames articulées suspendues, l'empilage progressif des lames lors du déroulement du volet se traduit par une diminution progressive de la vitesse de rotation du tube d'enroulement, le moteur retenant le tube d'enroulement. Lorsque toutes les lames sont empilées, le poids du volet roulant devient négligeable et, pendant le bref instant de rattrapage du jeu mentionné plus haut, cette vitesse chute brusquement, un bref instant, avant d'augmenter à nouveau. C'est la détection de cette chute de vitesse, qui peut tomber à zéro, qui permet d'arrêter le moteur.

Un mode d'exécution de la présente invention sera décrit en relation avec le dessin annexé dans lequel :
la figure 1 est une vue schématique d'un volet roulant motorisé ;
la figure 2 est une vue schématique, en coupe axiale, d'un entraînement de volet roulant à lames suspendues;
la figure 3 représente schématiquement les moyens de mesure de la vitesse et l'unité logique de traitement;
la figure 4 représente le logigramme du programme de test et de commande de l'arrêt du moteur; et
la figure 5 représente le logigramme de la routine de la reconnaissance de la butée haute.

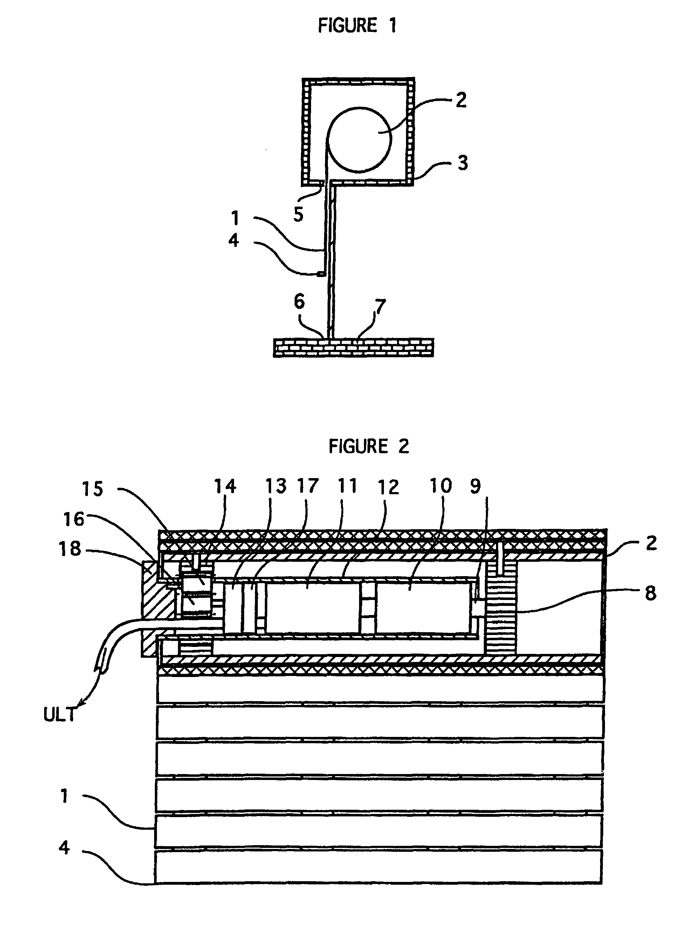

La figure 1 représente schématiquement un volet roulant 1 partiellement déroulé d'un tambour d'enroulement 2 motorisé logé dans un caisson 3, ce volet roulant 1 étant muni d'une lame terminale 4 munie de moyens d'arrêt, par exemple une équerre, venant buter en position haute, enroulée, contre une butée haute 5 constituée dans le cas particulier par le caisson 3 et, en position basse, contre une butée basse 6, par exemple la tablette 7 d'une fenêtre.

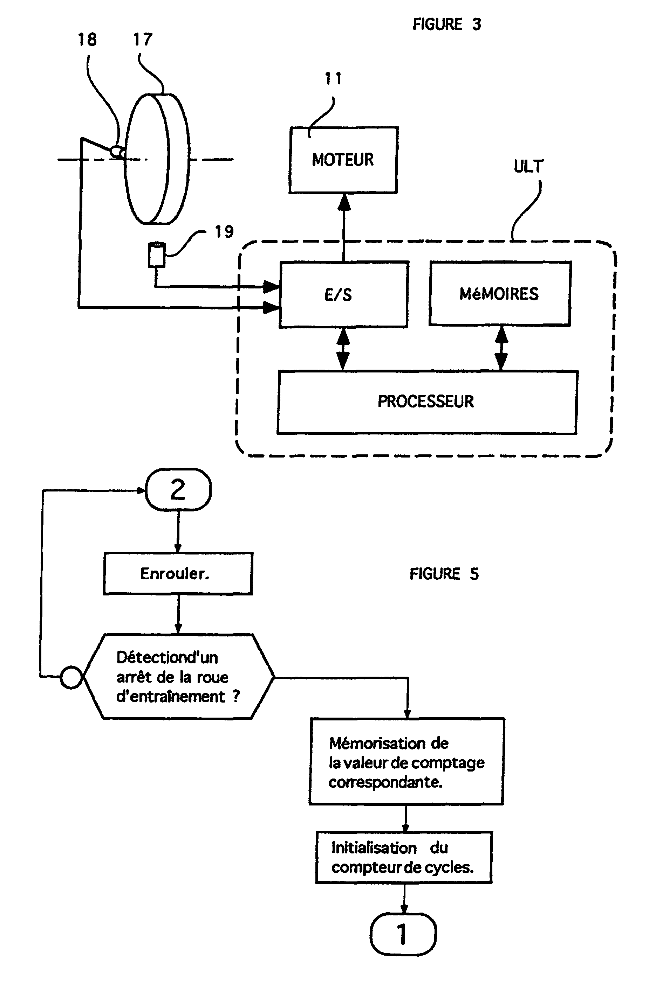

Comme représenté à la figure 2, le tambour d'enroulement 2 est solidaire d'une roue 8 fixée sur l'arbre de sortie 9 d'un réducteur 10 entraîné par un moteur 11. Le moteur 11 et le réducteur 10 sont montés dans un tube 12 logé, de manière connue, à l'intérieur du tube d'enroulement 2, ce tube 12 contenant en outre un compteur de tours bidirectionnel 13 entraîné en rotation par une couronne dentée 14 solidaire du tube d'enroulement 2, par l'intermédiaire de deux pignons 15 et 16 et un organe de mesure de la vitesse de rotation du tube d'enroulement 2 constitué, par exemple, d'une roue codeuse 17, également entraînée par l'intermédiaire des pignons 15 et 16, et deux détecteurs optoélectroniques 18 et 19 (figure 3). Le tube 12 du moteur tubulaire est fixé sur un support d'extrémité 17 traversé par un ensemble de conducteurs 18 pour l'alimentation du moteur, la mesure de la vitesse et à la lecture de l'état du compteur bidirectionnel 13.

Aux moyens représentés à la figure 2, est associée une unité logique de traitement ULT (figure 3) comprenant un microprocesseur des entrées/sorties E/s et des mémoires vive et morte et à laquelle sont envoyés les signaux du compteur bidirectionnel 13 et les signaux de l'organe de mesure de la vitesse. L'ULT commande le moteur 11.

L'unité logique de traitement comprend une mémoire pour la mémorisation de la valeur de comptage du compteur et une mémoire dans laquelle est emmagasiné un programme d'arrêt.

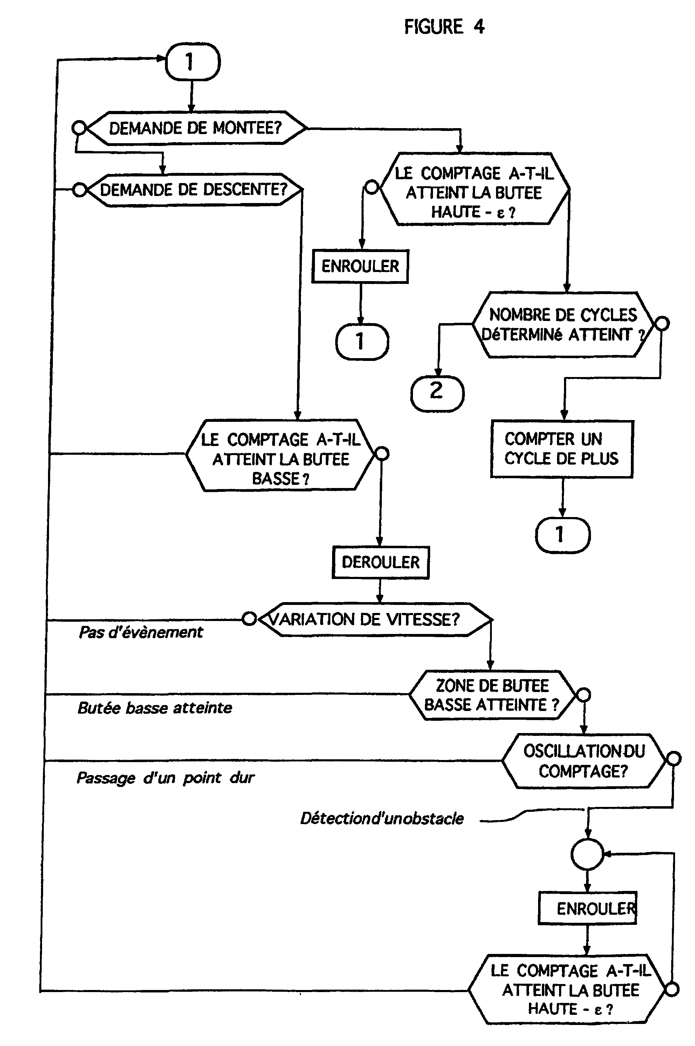

Le logigramme de commande du moteur du volet roulant est représenté à la figure 4.

On supposera que le compteur bidirectionnel 13 est à zéro lorsque le volet roulant est totalement enroulé sur le tube d'enroulement 2, ce qui n'intervient jamais en fonctionnement normal, puisque, dans ce cas, le volet roulant ne peut pas être totalement enroulé à l'intérieur du caisson 3.

Lors de la première mise en service, il convient de reconnaître les butées haute et basse 5 et 6, c'est-à-dire d'enregistrer l'état du compteur bidirectionnel 13 pour ces deux positions. Le volet roulant peut être dans une position quelconque, par exemple partiellement déroulé. La reconnaissance des butées haute et basse peut se faire dans n'importe quel ordre. Supposons que l'on commence par la butée haute. Cette reconnaissance ne nécessite pas l'intervention d'un installateur, mais elle peut être faite par l'utilisateur. En agissant directement sur le boîtier de commande du volet roulant, l'utilisateur donne un ordre de montée. L'ULT n'ayant pas encore enregistré de valeur de comptage correspondant à la butée haute moins ε, le volet roulant s'enroulera jusqu'à ce qu'il arrive en butée haute. Le tambour d'enroulement 2 s'arrête. Cet arrêt est détecté par l'ULT qui enregistre l'état correspondant du compteur. La reconnaissance de la butée basse s'effectue de la même manière en commandant le déroulement du volet roulant au moyen du boîtier de commande. Cette reconnaissance peut très bien attendre la première fermeture nécessaire du volet roulant. Lors du déroulement, le volet roulant entraîne, par son poids, le tube d'enroulement 2 et le moteur, entraîné, travaille en frein. Au fur et à mesure que les lames du volet roulant s'empile, le poids du volet roulant diminue et le tambour d'enroulement, ainsi que le moteur, tournent moins vite. A l'instant où la dernière lame s'empile, le poids du volet roulant devient négligeable et sa vitesse de rotation tombe un bref instant à zéro, le temps que le jeu mécanique soit rattrapé par le moteur. L'ULT commande alors l'arrêt du moteur et enregistre la valeur du compteur pour cette position.

Dans le cas d'une toile, un passage à zéro du volet roulant sera également détecté à l'instant où la barre de charge de la toile arrive en butée basse. Dans le cas d'un élément de fermeture rigide, tel qu'une porte, l'arbre de transmission sera bloqué aussi bien en butée haute qu'en butée basse, ce blocage correspondant à l'apparition d'un surcouple.

Les butées haute et basse ayant été reconnues, l'installation fonctionne ensuite selon le logigramme de la figure 4 et la routine de la figure 5.

Lors d'une demande de montée, le volet roulant s'enroulera jusqu'à ce que le compteur ait atteint une valeur correspondant à la valeur précédemment enregistrée, mais augmentée d'une valeur ε. Si cette valeur est atteinte, l'ULT testera tout d'abord si un nombre de cycles déterminé a été atteint, cycles comptés par un compteur de cycles. Si ce nombre de cycles déterminé n'a pas été atteint, un cycle de plus sera compté par le compteur de cycles et l'ULT commandera l'arrêt du moteur. En raison de la correction ε, le moteur s'arrêtera un petit peu avant que le volet roulant ait atteint sa butée haute, ce qui évite ainsi que le volet roulant soit soumis à des efforts de traction correspondant au blocage du tambour d'enroulement retenu par le volet roulant. La valeur ε est choisie de telle sorte que le volet roulant apparaît toujours comme totalement enroulé.

Lorsque le nombre de cycles déterminé est atteint, l'ULT procède à une nouvelle reconnaissance de la butée physique haute en commandant la routine représentée à la figure 5. Une nouvelle valeur de comptage est mémorisée et le compteur de cycles est réinitialisé. Cette nouvelle reconnaissance périodique de la butée haute a pour but de compenser les variations de longueur saisonnière et permanente du volet roulant.

En descente, l'ULT teste l'état du compteur et commande l'arrêt du moteur lorsque celui-ci atteint la valeur enregistrée correspondant à la butée basse. Tant que le comptage n'a pas atteint la valeur correspondant à la butée basse, le programme teste s'il a variation de la vitesse de rotation du tube d'enroulement 2. S'il n'y a pas de variation de vitesse, le programme reboucle sur 1. Si une variation de vitesse est détectée, on teste si la zone de butée basse est atteinte, c'est-à-dire si la valeur de comptage correspond à la butée basse. Dans l'affirmative, l'ULT commande l'arrêt du moteur. Dans la négative, on teste s'il y a oscillation du comptage, c'est-à-dire s'il y a incrémentation et décrémentation du compteur. Dans l'affirmative, l'ULT identifie un point dur, le programme reboucle sur 1 et le déroulement se poursuit. S'il n'y a pas d'oscillation du comptage, mais seulement une chute de la vitesse, l'ULT identifie un obstacle et le programme commande l'enroulement du volet roulant de manière à libérer l'obstacle. L'enroulement se poursuit jusqu'à ce que le comptage ait atteint la valeur correspondant à la butée haute plus ε.

Selon l'état initial du compteur et le sens du comptage, ε peut bien entendu être positif ou négatif.

Le volet roulant peut bien entendu être arrêté volontairement dans n'importe quelle position intermédiaire en actionnant un bouton stop.

Tout autre moyen de mesure de vitesse pourrait être utilisée tel que, par exemple, un codeur à disque, un moteur synchrone ou une jauge de contrainte tels que prévus dans l'installation décrite dans le document EP-A-0439 422 au nom de la demanderesse, ou un anneau magnétique multipolaire solidaire en rotation du tube d'enroulement 2 et coopérant avec un capteur de Hall, comme décrit dans le document DE 44 40 449.

Par la mesure de la vitesse, on détecte indirectement la présence d'un surcouple. Cette détection pourrait toutefois se faire d'une autre manière, par exemple par la mesure de la différence de phase sur l'enroulement principal et l'enroulement auxiliaire ou par tout autre moyen connu, par exemple par la détection d'une surintensité de courant, comme décrit dans les documents DE 42 44 378 ou JP 42 50 286 ou d'une chute de tension sur la phase auxiliaire d'un moteur asynchrone (DE 43 12 987) ou aux bornes du condensateur de déphasage (EP 0551 053).

## Revendications

1. Installation de fermeture ou de protection solaire comprenant un moteur électrique (11), un arbre d'entraînement (2) entraîné par ce moteur, un élément de fermeture ou de protection solaire (1) entraîné par l'arbre d'entraînement et se déplaçant entre deux positions extrêmes, respectivement haute (5) et basse (6), un dispositif de commande d'arrêt du moteur opérant au moins par détection d'une chute de la vitesse angulaire de l'arbre d'entraînement et comprenant à cet effet une unité logique de traitement (ULT) équipée d'un processeur contenant un programme et un compteur bidirectionnel de nombre de tours (13), de manière à commander l'arrêt du moteur et sa rotation en sens opposé lorsqu'une chute de vitesse est détectée alors que l'état du compteur correspond à une position intermédiaire de l'élément de fermeture ou de protection solaire, **caractérisée en ce que** le compteur bidirectionnel (13) est lié cinématiquement à l'arbre d'entraînement et **en ce que** l'unité logique de traitement (ULT) est en outre programmée de manière à commander, lors d'une descente de l'élément de fermeture ou de protection solaire, la poursuite de la descente lorsque la détection d'une chute de vitesse est accompagnée d'une incrémentation/décrémentation du compteur bidirectionnel, c'est-à-dire s'il y a oscillation du comptage.

2. Installation selon la revendication 1, **caractérisée en ce que**, en montée, l'arrêt du moteur est commandé lorsque le compteur atteint une valeur correspondant à la butée haute corrigée d'une valeur ε telle que le moteur est arrêté avant que l'élément de fermeture ou de protection solaire a atteint sa butée haute.

3. Installation selon la revendication 2, **caractérisée en ce que** le programme comprend une routine (figure 5) de reconnaissance de la butée haute et de mémorisation-de cette butée haute par détection d'un surcouple, directement ou par détection de l'arrêt de l'arbre d'entraînement, et que l'unité logique de traitement comprend un compteur de cycles réinitialisant périodiquement la routine au bout d'un nombre de cycles déterminé de manière à réactualiser périodiquement la valeur de comptage correspondant à la butée haute.

4. Installation selon l'une des revendications 1 à 3, **caractérisée en ce que** l'unité logique de traitement est en outre programmée.

## Claims

1. Installation for closure or for protecting against the sun, which comprises an electric motor (11), a drive shaft (2) driven by this motor, an element for closure or for protecting against the sun (1) driven by the drive shaft and moving between two extreme positions : a raised position (5) and a lowered position (6) respectively a device for stopping the motor containing a program operating by detecting excess torque or a drop in the angular velocity of the drive shaft and which comprises for this purpose a logic processing unit (LPU) equipped with a processor and two-way revolutions counter (13), so as to stop the motor and make it rotate in the opposite direction when a drop in speed is detected while the state of the counter corresponds to an intermediate position of the closure element or the element for protecting against the sun, **characterized in** the that two-way counter (13) is kinematically linked to the drive shaft and the logic processing unit (LPU) is further programmed in such a way as to make during lowering of the element for closure or for protecting against sun, a lowering continue when the detection of a drop in speed is accompanied by an increment/decrement of the two-way counter, i.e. if the count is fluctuating.

2. Installation as claimed in claim 1, **characterized in that** during raising the motor is stopped when the counter reaches a value corresponding to the top stop corrected by a value - such that the motor is stopped before the closure element or element for protecting against the sun has reached its top stop.

3. Installation as claimed in claim 2, **characterized in that** the program contains a routine (Figure 5) for recognizing the top stop and storing this top stop in memory by detecting an excess torque, directly or by detecting the fact that the drive shaft has stopped, and wherein the logic processing unit contains a cycles counter which periodically re-initializes the routine after a given number of cycles so as periodically to update the count value which corresponds to the top stop.

4. Installation as claimed in any one of the claims 1 to 3, **characterized in that** the logic processing unit is further programmed.

## Patentansprüche

1. Schliess- oder Sonnenschutz-Installation mit einem Elektromotor (11), einer von diesem Motor angetriebenen Antriebswelle (2), einem Schliess- oder Sonnenschutzelement (1), das von der Antriebswelle angetrieben wird und zwischen zwei Grenzpositionen bzw. einer oberen (5) und einer unteren Position (6) verschiebbar ist, mit einer das Anhalten des Motors steuernden Vorrichtung, welche wenigstens durch Erfassen eines Abfalls der Winkelgeschwindigkeit der Antriebswelle betätigt wird und zu diesem Zwecke eine logische Verarbeitungseinheit (ULT) aufweist, welche mit einem Prozessor ausgerüstet ist, der ein Programm und einen Zweirichtungszähler (13) zum Zählen der Umdrehungen enthält, um den Motor so zu steuern, dass er anhält und sich im entgegengesetzten Sinne dreht, wenn ein Geschwindigkeitsabfall erfasst wird, während der Zählerstand einer Zwischenposition des Schliess- oder Sonnenschutzelements entspricht, **dadurch gekennzeichnet, dass** der Zweirichtungszähler (13) kinematisch mit der Antriebselle verbunden ist und dass die logische Verarbeitungseinheit (ULT) ausserdem so programmiert ist, dass bei einer Abwärtsbewegung des Schliess- oder Sonnenschutzelements eine Steuerung derart erfolgt, dass sich die Abwärtsbewegung fortsetzt, wenn das Erfassen eines Geschwindigkeitsabfalls von einem Aufwärts-/Abwärtsschalten des Zweirichtungszählers begleitet wird, das heisst, wenn die Zählung oszilliert.

2. Installation nach Anspruch 1, **dadurch gekennzeichnet, dass** bei einer Aufwärtsbewegung der Motor so gesteuert wird, dass er anhält, wenn der Zähler einen Wert erreicht, welcher dem oberen, um einen Wert ε korrigierten Anschlag entspricht, derart, dass der Motor anhält, bevor das Schliess- oder Sonnenschutzelement seinen oberen Anschlag erreicht hat.

3. Installation nach Anspruch 2, **dadurch gekennzeichnet, dass** das Programm eine Routine (Figur 5) zum Erkennen des oberen Anschlags und zum Speichern dieses oberen Anschlags entweder direkt durch Erfassen eines Überdrehmoments oder durch Erfassen des Anhaltens der Antriebswelle aufweist, und dass die logische Verarbeitungseinheit einen Zyklenzähler aufweist, der periodisch die Routine am Ende einer bestimmten Anzahl von Zyklen wieder initialisiert, um periodisch der dem oberen Anschlag entsprechenden Zählerwert wieder zu aktualisieren.

4. Installation nach einem der Ansprüche 1 bis 3, **dadurch gekennzeichnet, dass** die logische Verarbeitungseinheit ausserdem programmiert ist.
